# EUROPÄISCHE PATENTSCHRIFT

(11) **EP 1 120 553 B1**
(45) Veröffentlichungstag und Bekanntmachung des Hinweises auf die Patenterteilung: **11.10.2006**
(21) Anmeldenummer: 00117119.8
(22) Anmeldetag: 10.08.2000
(51) Int. Cl.: F01P 7/16, G05D 23/13

(54) **Ventil, insbesondere thermostatisches Ventil**
Valve, especially a thermostatic valve
Soupape, notamment une soupape thermostatique

(30) Priorität: 26.01.2000 DE 10003135
(43) Veröffentlichungstag der Anmeldung: 01.08.2001
(73) Patentinhaber: Gustav Wahler GmbH u. Co.KG, 73730 Esslingen (DE)
(72) Erfinder: Zimmermann, Frank, 73734 Esslingen (DE); Weiss, Rainer, 78256 Steisslingen (DE)
(74) Vertreter: Kratzsch, Volkhard

(56) Entgegenhaltungen:
- EP-A- 0 890 891
- DE-A- 4 410 249
- DE-A- 19 800 681
- DE-U- 7 142 759
- FR-A- 2 589 219

## Beschreibung

Die Erfindung bezieht sich auf ein Ventil, insbesondere thermostatisches Ventil, für das Kühlmittel im Kühlmittelkreislauf einer Brennkraftmaschine mit den übrigen Merkmalen im Oberbegriff des Anspruchs 1.

Es ist ein Ventil dieser Art beispielsweise aus DE 41 39 328 A1 bekannt. Bei diesem Ventil besteht das Ventilglied aus einer zylindrischen Schieberhülse, die am oberen Ende offen ist und am unteren Ende mindestens einen mit dem Einlass des Ventilgehäuses in Verbindung stehenden Wanddurchbruch aufweist, der das Eintreten des Kühlmittels vom Einlass im Ventilgehäuse in das Innere der Schieberhülse ermöglicht. In einer ersten Stellung der Schieberhülse, die z.B. dem kalten Zustand der Brennkraftmaschine nach Start und dem Beginn der Warmlaufphase der Brennkraftmaschine zugeordnet ist, befindet sich die Schieberhülse in einer solchen Position, in der sie oberhalb der ersten Wandung und darin enthaltenen Führungsöffnung und hierbei innerhalb der zweiten Wandung und zweiten Führungsöffnung lagert, derart, dass der Durchgang des Kühlmittels vom Einlass im Ventilgehäuse her durch die erste Führungsöffnung in der ersten Wandung hindurch und von dort ungehindert zum ersten Auslass, z.B. zurück zum Motor, möglich ist. Es kann dabei zwar auch Kühlmittel vom Einlass im Ventilgehäuse her durch den mindestens einen bodenseitigen Durchbruch in das Innere der Schieberhülse gelangen. Die Schieberhülse ist jedoch mit ihrem oberen stirnseitigen Ende in dieser ersten Stellung gegen einen Gehäusedeckel des Ventilgehäuses dicht angepresst, so dass in das Innere der Schieberhülse gelangendes Kühlmittel daraus nicht entweichen kann und somit kein Umlauf im Inneren möglich ist. Mit zunehmender Erwärmung des über den Einlass in das Ventilgehäuse eingeführten Kühlmittels wird die Schieberhülse aus der genannten Ausgangsstellung axial nach unten verschoben, zunächst in eine Zwischenstellung, in der das Kühlmittel vom Einlass her einerseits zum ersten Auslass und andererseits durch den mindestens einen bodenseitigen Durchbruch der Schieberhülse hindurch und durch das Innere der Schieberhülse hindurch aus dem nunmehr zum zweiten Auslass hin offenen Axialende der Schieberhülse austreten und somit auch in den zweiten Auslass gelangen kann, der z.B. mit dem Kühler des Kühlmittelkreislaufs verbunden ist. Diese Stellung entspricht dem Mischbetrieb für die Brennkraftmaschine. Mit weiter zunehmender Kühlmitteltemperatur wird die Schieberhülse weiter axial in Richtung auf den Einlass nach unten und soweit verschoben, bis die Schieberhülse mit ihrer Hülsenwandung innerhalb der ersten Wandung und der dortigen Führungsöffnung sowie zugleich auch innerhalb der zweiten Wandung und der dortigen Führungsöffnung verläuft. In dieser Stellung ist der Durchgang des Kühlmittels vom Einlass her zum ersten Auslass gesperrt, hingegen durch den mindestens einen bodenseitigen Durchlass der Schieberhülse hindurch in das Innere der Schieberhülse und aus deren offenes Axialende heraus zum zweiten Auslass, z.B. Kühler, möglich. Diese Stellung der Schieberhülse entspricht dem Kühlbetrieb der Brennkraftmaschine. Das Ventilglied in Form der Schieberhülse wird bei diesem bekannten Ventil somit, ausgehend bei kaltem Kühlmittel von einer oberen Ausgangsstellung, mit zunehmender Erwärmung des Kühlmittels nach unten verschoben. Das Ventil ermöglicht nur die beschriebenen Ventilstellungen, bei denen das Kühlmittel zumindest vom Einlass her zu einem der Auslässe geleitet wird und somit eine Kühlmittelumwälzung immer geschieht.

Es gibt jedoch für den Betrieb des Kühlmittelkreislaufs einer Brennkraftmaschine bestimmte Betriebsphasen, bei denen eine völlige Sperrung der Umwälzung des Kühlmittels wünschenswert ist. Eine solche ist mittels des bekannten Ventils nicht möglich.

Der Erfindung liegt die Aufgabe zugrunde, ein Ventil der eingangs genannten Art zu schaffen, das einfach, kostengünstig und betriebssicher ist und das eine Steuerung des Kühlmittels im Kühlkreislauf für verschiedene Betriebssituationen ermöglicht, und hierbei auch eine solche, bei der gar keine Umwälzung des Kühlmittels im Kühlkreislauf geschieht.

Die Aufgabe ist bei einem Ventil der eingangs genannten Art gemäß der Erfindung durch die Merkmale im Anspruch 1 gelöst. Durch diese Gestaltung des Ventils, insbesondere der Schieberhülse, ist es möglich, die Schieberhülse in eine solche Stellung zu verschieben, in der der Durchgang des über die Axialöffnung der Schieberhülse vom Einlass her in das Innere der Schieberhülse eintretenden Kühlmittels sowohl zum ersten Auslass als auch zum zweiten Auslass hin gesperrt ist und somit überhaupt kein Durchlass möglich ist. Mittels des erfindungsgemäßen Ventils kann somit für den Kühlmittelkreislauf ein solcher Betriebszustand vorgegeben werden, bei dem überhaupt keine Umwälzung des Kühlmittels geschieht. Bei allem ermöglicht das Ventil ansonsten in einfacher Weise alle anderen Betriebsphasen und Einstellungen für das Kühlmittel. Das Ventil ist einfach, kostengünstig, kompakt und platzsparend und hierbei betriebssicher.

Weitere besondere Erfindungsmerkmale und Ausgestaltungen ergeben sich aus den Unteransprüchen.

Weitere Einzelheiten und Vorteile ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich auf die Ansprüche verwiesen, wodurch jedoch alle diese Anspruchsmerkmale als an dieser Stelle ausdrücklich und erfindungswesentlich offenbart zu gelten haben.

Die Erfindung ist nachfolgend anhand eines in den Zeichnungen gezeigten Ausführungsbeispieles näher erläutert. Es zeigen:
- Fig. 1 bis 4: jeweils einen schematischen vertikalen Schnitt von Teilen eines Ventils, insbesondere thermostatischen Ventils gemäß einem ersten Ausführungsbeispiel , wobei sich dessen Ventilglied in einer ersten bzw. zweiten bzw. dritten bzw. vierten Stellung befindet.
- Fig. 5 bis 6: jeweils einen schematischen vertikalen Schnitt von Teilen eines Ventils, insbesondere thermostatischen Ventils, gemäß einem zweiten Ausführungsbeispiel, bei dem sich analog Fig. 1 bis 4 das Ventilglied in einer ersten bzw. zweiten bzw. dritten bzw. vierten Stellung befindet.

In den Zeichnungen ist ein Ventil 10, insbesondere ein thermostatisches Ventil, schematisch dargestellt, das für das Kühlmittel in einem nicht weiter gezeigten Kühlmittelkreislauf einer Brennkraftmaschine geeignet ist. Das Ventil 10 weist ein nur teilweise dargestelltes Ventilgehäuse 11 und in diesem ein Ventilglied 12 auf, das als Schieberhülse 13 ausgebildet ist. Das Ventilgehäuse 11 weist einen Einlassstutzen 14 mit dadurch gebildetem Einlass 15 sowie zwei Auslassstutzen 16 und 18 auf, die einen ersten Auslass 17 bzw. zweiten Auslass 19 bilden. Die Schieberhülse 13 steuert entsprechend ihrer jeweiligen Stellung den Durchgang eines Kühlmittels, das beim Einlass 15 zugeführt wird, zum ersten Auslass 17 und/oder zum zweiten Auslass 19. Der Einlassstutzen 14 mit Einlass 15 ist mit einer nicht weiter gezeigten, von der Brennkraftmaschine kommenden Leitung verbindbar, so dass der Einlass 15 das von der Brennkraftmaschine her kommende Kühlmittel führt. Der erste Auslassstutzen 16 mit dem ersten Auslass 17 ist mit einer nicht gezeigten Leitung verbindbar, die mit der Brennkraftmaschine in Verbindung steht und Kühlmittel darüber zur Brennkraftmaschine zurück führt. Der zweite Auslassstutzen 18 mit zweitem Auslass 19 ist mit einer nicht weiter gezeigten Leitung verbindbar, die zum Kühler des Kühlmittelkreislaufs führt.

Die Schieberhülse 13 ist beim gezeigten Ausführungsbeispiel zylindrisch ausgebildet und stellt somit einen Ringschieber dar.

Das Ventilgehäuse 11 weist eine in den Zeichnungen untere erste Wandung 20 mit darin enthaltener zentraler Führungsöffnung 21 auf, wobei diese erste Wandung 20 den Einlass 15 und den ersten Auslass 17 voneinander trennt. In Abstand von der ersten Wandung 20 befindet sich oberhalb dieser eine zweite Wandung 22 mit darin enthaltener zweiter Führungsöffnung 23. Diese zweite Wandung 22 trennt den ersten Auslass 17 und den zweiten Auslass 19 voneinander. Hierzu sind die beiden Wandungen 20 und 22 auf der zum zweiten Auslass 19 weisenden Seite über einen Wandungsteil 24 einstückig miteinander verbunden, der zusammen mit den Wandungen 20, 22 einen mit dem ersten Auslass 17 in Verbindung stehenden Ringraum 25 begrenzt. Jede trennende Wandung 20, 22 enthält innerhalb ihrer Führungsöffnung 21 bzw. 23 einen Dichtungsring 26 bzw. 27, der die Abdichtung gegenüber der Schieberhülse 13 bewirkt.

Am Ventilgehäuse 11 ist in Abstand oberhalb des Ventilgliedes 12 eine nur schematisch angedeutete Antriebseinrichtung 28, z.B. in Gestalt eines Spindelmotors, angeordnet, die über ein mit der Schieberhülse 13 verbundenes Antriebsglied 29, z.B. eine Spindel, auf die Schieberhülse 13 zu deren Verschiebung in Achsrichtung gemäß Pfeil 30 arbeitet. Der oberhalb der zweiten trennenden Wandung 22 vorhandene Raum 31, der mit dem zweiten Auslass 19 in Verbindung steht, ist mittels eines Deckels 32 des Ventilgehäuses 11 oben abgeschlossen, der die Antriebseinrichtung 28 trägt.

Die Schieberhülse 13 weist am in den Zeichnungen unteren Ende für den Einlass des Kühlmittels in das Innere der Schieberhülse 13 zumindest eine Axialöffnung 33 auf, die sich beim gezeigten Ausführungsbeispiel über den gesamten Innendurchmesser der Schieberhülse 13 erstreckt, was jedoch nicht zwingend ist. Die Axialöffnung 33 dient dem Eintritt des Kühlmittels. Ferner enthält die Schieberhülse 13 als Auslass des Kühlmittels aus dem Inneren der Schieberhülse 13 mindestens einen Wanddurchbruch 34 in ihrer zylindrischen Hülsenwandung 35. Beim gezeigten Ausführungsbeispiel sind mehrere, ringsum in Abständen angeordnete Wanddurchbrüche 34 vorgesehen. Der jeweilige Wanddurchbruch 34 besteht beim gezeigten Ausführungsbeispiel aus einem sich in Umfangsrichtung erstreckenden länglichen Fenster. Die Form und/oder Größe der jeweiligen Wanddurchbrüche 34 kann statt dessen auch in vielfältiger anderer Weise beschaffen sein. So können als Wanddurchbrüche 34 z.B. kreisförmige Löcher und/oder in Axialrichtung sich erstreckende längliche Fenster oder dergleichen vorgesehen sein.

Die Schieberhülse 13 weist ferner am in Axialabstand von der unteren Axialöffnung 33 befindlichen Bereich oberhalb des mindestens einen Wanddurchbruches 34 eine geschlossene Querwand 36 auf, die das von der Hülsenwandung 35 umgrenzte Innere 37 der Schieberhülse 13 in diesem Bereich nach außen hin abschließt. Aufgrund der beim gezeigten Ausführungsbeispiel gegebenen Ringform bzw. Zylinderform der Schieberhülse 13 ist die geschlossene Querwand 36 dementsprechend aus einer Kreisscheibe gebildet. Die Querwand 36 kann einstückig mit der Hülsenwandung 35 sein oder statt dessen auch ein separates, dicht eingesetztes Bauteil sein. Die Schieberhülse 13 weist ferner einen in axialer Verlängerung der Hülsenwandung 35 verlaufenden und als insbesondere Führungsabschnitt ausgebildeten zylindrischen Wandungsteil 38 auf, der sich im Bereich der geschlossenen Querwand 36 beginnend anschließt. Der Innendurchmesser und Außendurchmesser des Wandungsteils 38 entspricht demjenigen der Hülsenwandung 35. Der Wandungsteil 38 kann einstückig mit der Querwand 36 und/oder Hülsenwandung 35 sein oder er besteht statt dessen aus einem eigenständigen, damit fest verbundenen Bauteil. Der axiale Abstand der Querwand 36 vom Bereich der Wanddurchbrüche 34 kann auch größer als dargestellt sein; denn auf diesen Abstand kommt es nicht entscheidend an.

Die Schieberhülse 13 kann bei der Betätigung mittels der Antriebseinrichtung 28 mit Antriebsglied 29 aufgrund verschiedenster Gegebenheiten, äußerer Parameter etc. bei der Verschiebung in Pfeilrichtung 30 unterschiedliche Stellungen relativ zum Ventilgehäuse 11, insbesondere den Wandungen 20, 22 mit Führungsöffnungen 21, 23, einnehmen, wodurch für den Kühlkreislauf unterschiedliche Situationen vorgegeben werden.

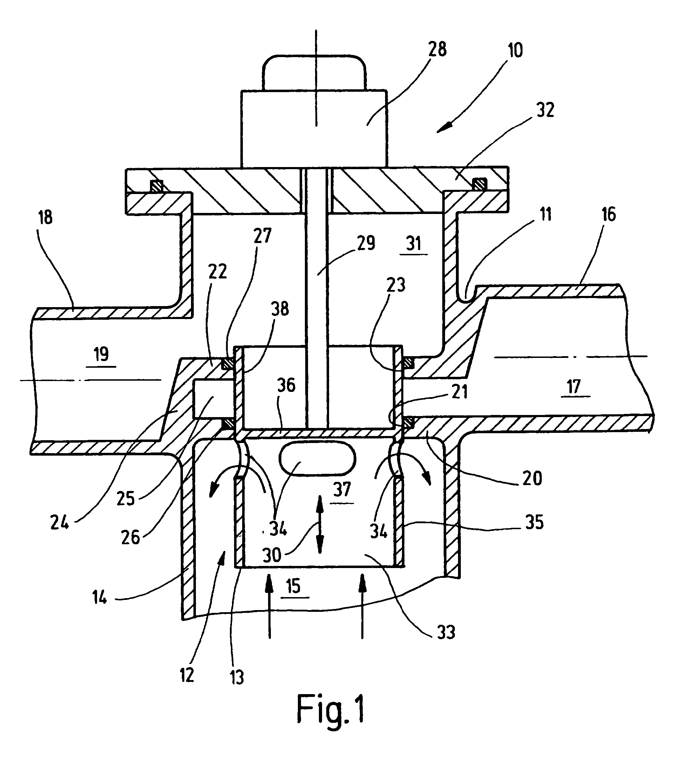

In Fig. 1 ist ein Zustand gezeigt, bei dem die Schieberhülse 13 sich in einer ersten Stellung befindet. In dieser ersten Stellung befindet sich der Bereich der Schieberhülse 13, auf dem sich die geschlossene Querwand 36 befindet, unterhalb oder innerhalb der ersten Führungsöffnung 21, wobei die Wanddurchbrüche 34 mit ihrer oberen Randkante auf jeden Fall noch nicht auf Höhe des Ringraumes 25, insbesondere der Oberseite der Wandung 20, verlaufen. In dieser ersten Stellung der Schieberhülse 13 ist somit der Durchgang des über die Axialöffnung 33 vom Einlass 15 her in die Schieberhülse 13 eintretenden Kühlmittels sowohl zum ersten Auslass 17, z.B. zum Motor, hin als auch zum zweiten Auslass 19, z.B. zum Kühler, hin gesperrt. Das Ventil 10 ist somit zu beiden Auslässen 17, 19 geschlossen, so dass gar keine Umwälzung des Kühlmittels in dieser ersten Stellung der Schieberhülse 13 stattfindet. Eine solche Ventilstellung kann für bestimmte Betriebssituationen einer Brennkraftmaschine von besonderem Vorteil sein.

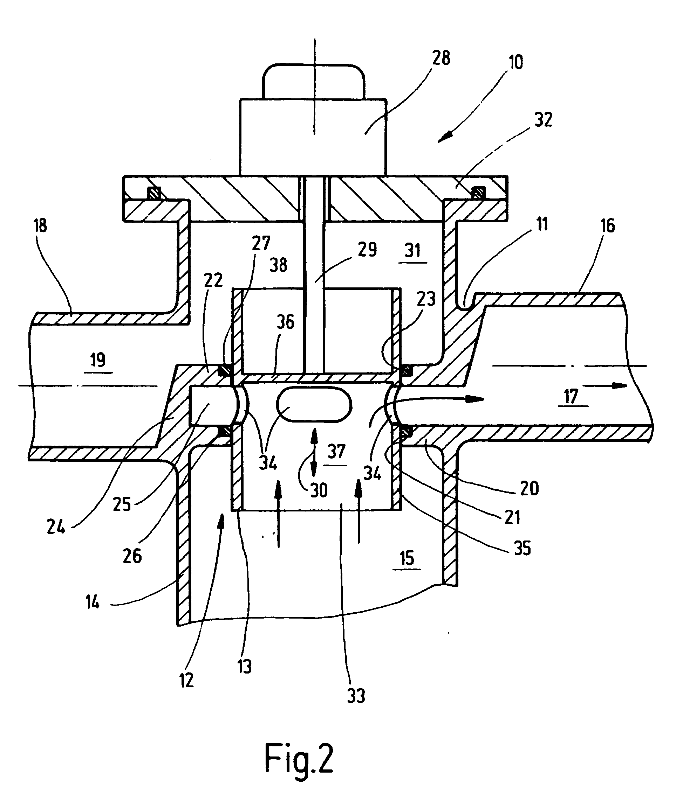

In Fig. 2 befindet sich die Schieberhülse 13 in einer zweiten Stellung, in der die Schieberhülse 13 im Vergleich zur ersten Stellung gemäß Fig. 1 in Pfeilrichtung 30 weiter nach oben verschoben worden ist, so weit, dass sich die Durchbrüche 34 auf Höhe des Ringraumes 25 befinden, wobei sich der Bereich der Schieberhülse 13, auf dem sich die geschlossene Querwand 36 befindet, z.B. innerhalb der zweiten Führungsöffnung 23 der Wandung 22 befindet. In dieser Stellung ist eine Durchgangsverbindung für das Kühlmittel vom Einlass 15 in die Axialöffnung 33 und durch die Schieberhülse 13 und die Wanddurchbrüche 34 hindurch zum ersten Auslass 17, z.B. zum Motor, ermöglicht. Da die Wanddurchbrüche 34 nicht über die zweite Wandung 22 und die zweite Führungsöffnung 23 hinausragen, ist aufgrund der Querwand 36 der Durchgang vom Inneren 37 der Schieberhülse 13 zum zweiten Auslass 19, z.B. zum Kühler, gesperrt. Diese zweite Stellung der Schieberhülse 13 gemäß Fig. 2 ist z.B. dann von Vorteil, wenn die kalte Brennkraftmaschine gestartet wird und sich in der Warmlaufphase befindet, wobei dann das von der Brennkraftmaschine kommende kalte Kühlmittel dem Einlass 15 zugeführt und über den ersten Auslass 17 zurück zur Brennkraftmaschine geleitet wird, ohne dass eine Kühlung des Kühlmittels erfolgt, die in der Warmlaufphase von Nachteil wäre, da diese die Warmlaufphase verlängern würde.

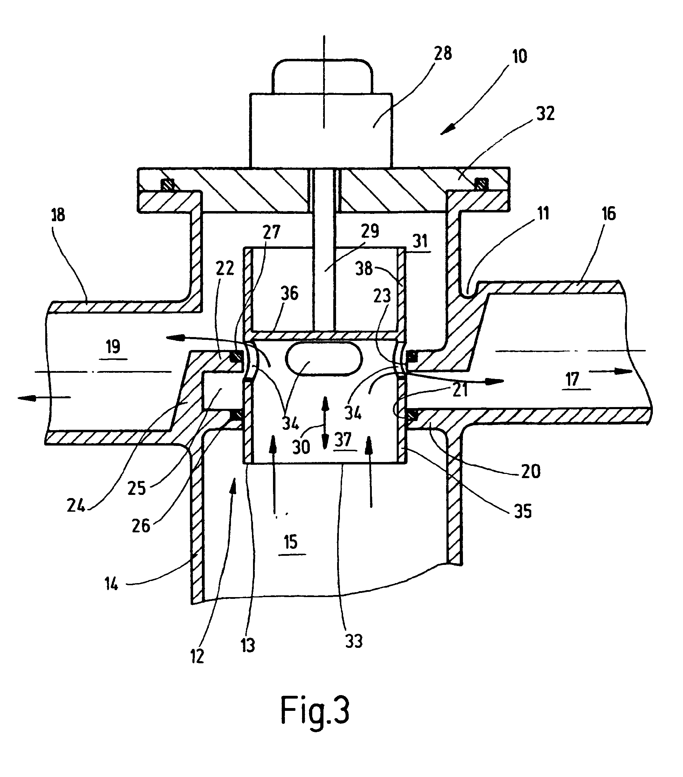

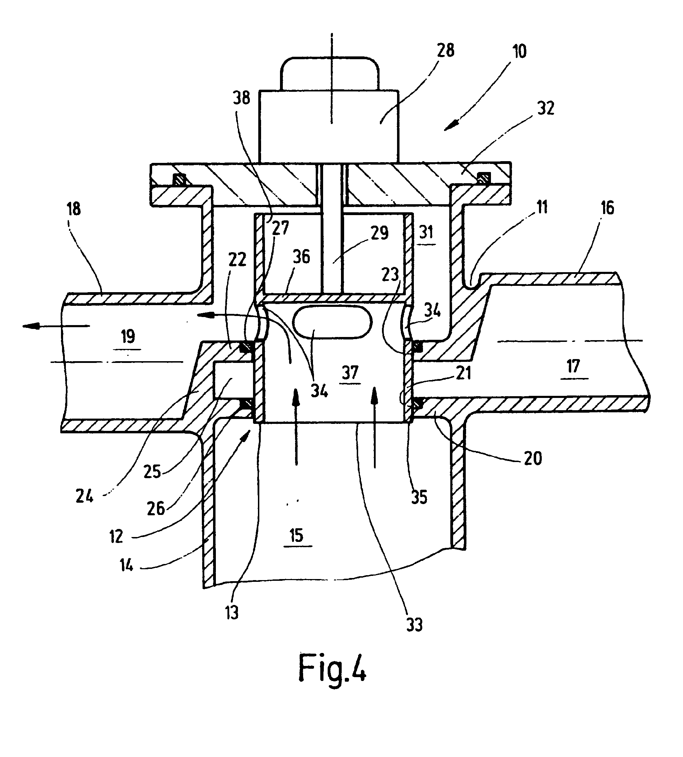

In Fig. 3 ist eine dritte Stellung der Schieberhülse 13 gezeigt, die gegenüber der zweiten Stellung in Fig. 2 durch Verschiebung in Pfeilrichtung 30 weiter nach oben erreicht worden ist. In dieser dritten Stellung befindet sich der Bereich, auf dem sich die geschlossene Querwand 36 befindet, in Abstand oberhalb der zweiten Führungsöffnung 23 und der Wandung 22. Der Bereich, auf dem sich die Wanddurchbrüche 34 befinden, befindet sich auf Höhe der Wandung 22 und der dortigen zweiten Führungsöffnung 23. Die in vertikaler Richtung gemessene Höhe der Wanddurchbrüche 34 ist größer als die Querschnittsdicke der Wandung 22, derart, dass in dieser dritten Stellung gemäß Fig. 3 die Wanddurchbrüche 34 mit dem unterhalb der Wandung 22 befindlichen Öffnungsbereich zum ersten Auslass 17 hin ausmünden und mit dem oberhalb der Wandung 22 befindlichen Bereich zum zweiten Auslass 19 ausmünden. In dieser dritten Stellung der Schieberhülse 13 ist eine Durchgangsverbindung durch das Innere 37 der Schieberhülse 13 von der Axialöffnung 33 zu den Wanddurchbrüchen 34 und damit eine Durchgangsverbindung für das Kühlmittel vom Einlass 15 sowohl zum ersten Auslass 17, z.B. zum Motor, als auch zugleich zum zweiten Auslass 19, z.B. zum Kühler, möglich. Diese dritte Position der Schieberhülse 13 ermöglicht somit einen Mischbetrieb im Kühlkreislauf der Brennkraftmaschine, wobei ein Teil des von der Brennkraftmaschine kommenden Kühlmittels über den ersten Auslass 17 zur Brennkraftmaschine zurück geleitet wird und ein anderer Teil zunächst zum zweiten Auslass 19 und zum Kühler geleitet wird und nach Kühlung zur Brennkraftmaschine zurückgeführt wird. Dieser Mischbetrieb entspricht einer Betriebsphase der Brennkraftmaschine zwischen der Warmlaufphase gemäß Fig. 2 und dem reinen Kühlbetrieb gemäß Fig. 4.

Bei der in Fig. 4 gezeigten vierten Stellung der Schieberhülse 13 befindet sich der Bereich der Wanddurchbrüche 34 oberhalb der zweiten Wandung 22 und dortigen Führungsöffnung 23, derart, dass eine Durchgangsverbindung durch die Schieberhülse 13 von der Axialöffnung 33 durch die Wanddurchbrüche 34 und somit vom Einlass 15 zum zweiten Auslass 19, z.B. zum Kühler, erfolgt. Hingegen ist in dieser vierten Stellung ein Durchgang vom Einlass 15 zum ersten Auslass 17 gesperrt. Diese Stellung der Schieberhülse 13 gibt einen Kühlbetrieb vor, beim dem das von der Brennkraftmaschine kommende, relativ heiße Kühlmittel über den zweiten Auslass 19 zum Kühler geleitet wird und nach Kühlung von letzterem zurück zur Brennkraftmaschine geführt wird.

Das Ventil 10 kann hinsichtlich der Schieberhülse 13 zusätzlich zu den einzelnen, vorstehend erläuterten vier Stellungen gemäß Fig. 4 natürlich auch weitere Zwischenstellungen einnehmen. Die jeweilige Position der Schieberhülse 13 wird von der Antriebseinrichtung 28 mit Antriebsglied 29 vorgegeben, die mittels einer nicht weiter gezeigten Steuereinrichtung oder Regeleinrichtung in Abhängigkeit von einer Vielzahl äußerer Parameter, Kennfeldgrößen od. dgl. Einflussgrößen gesteuert wird. Als derartige Einflussgrößen sind nur beispielsweise zu nennen: Kühlmitteltemperatur, Temperatur der Ansaugluft der Brennkraftmaschine, Belastung der Brennkraftmaschine, Fahrzeuggeschwindigkeit oder Drehzahl der Brennkraftmaschine, Drehmoment, Außendruck und Luftfeuchtigkeit der Ansaugluft, Unterdruck im Saugrohr, Abgastemperatur oder viele weitere Einflussgrößen mehr.

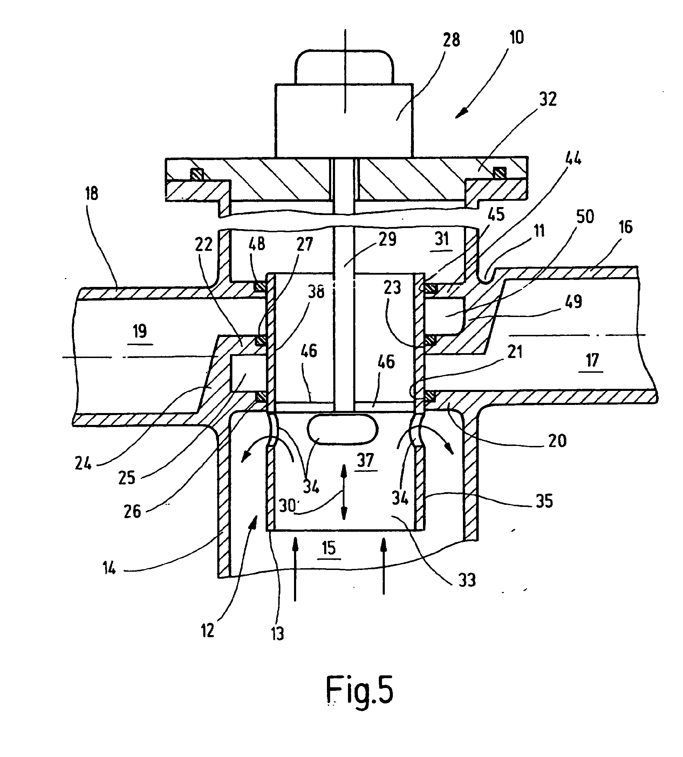

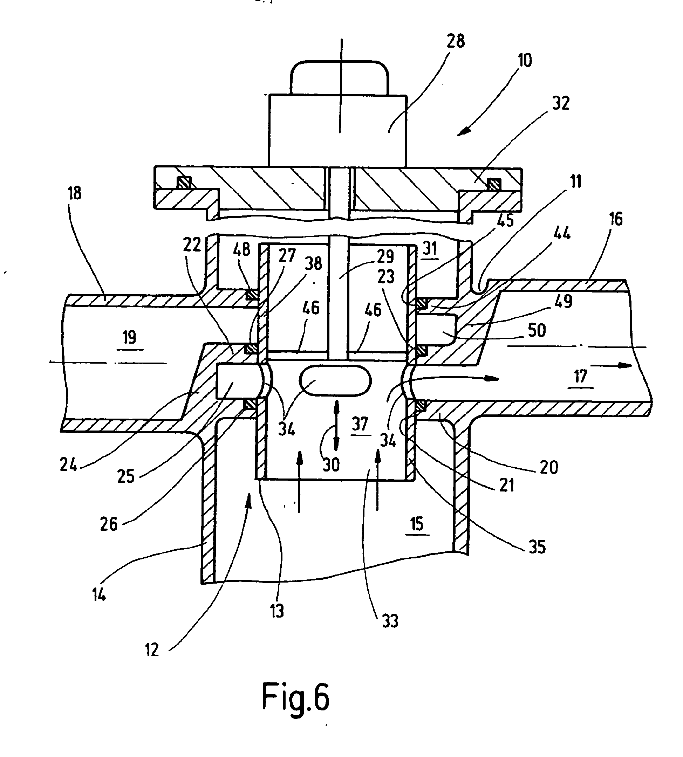

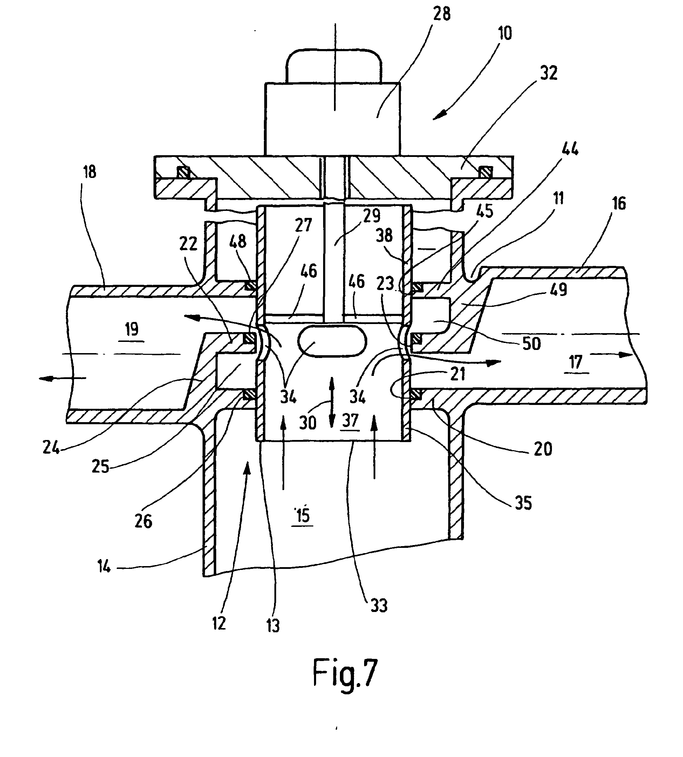

Bei dem in Fig. 5 bis 8 gezeigten zweiten Ausführungsbeispiel sind für die Teile, die dem ersten Ausführungsbeispiel entsprechen, gleiche Bezugszeichen verwendet, so dass dadurch zur Vermeidung von Wiederholungen auf die Beschreibung des ersten Ausführungsbeispieles Bezug genommen ist.

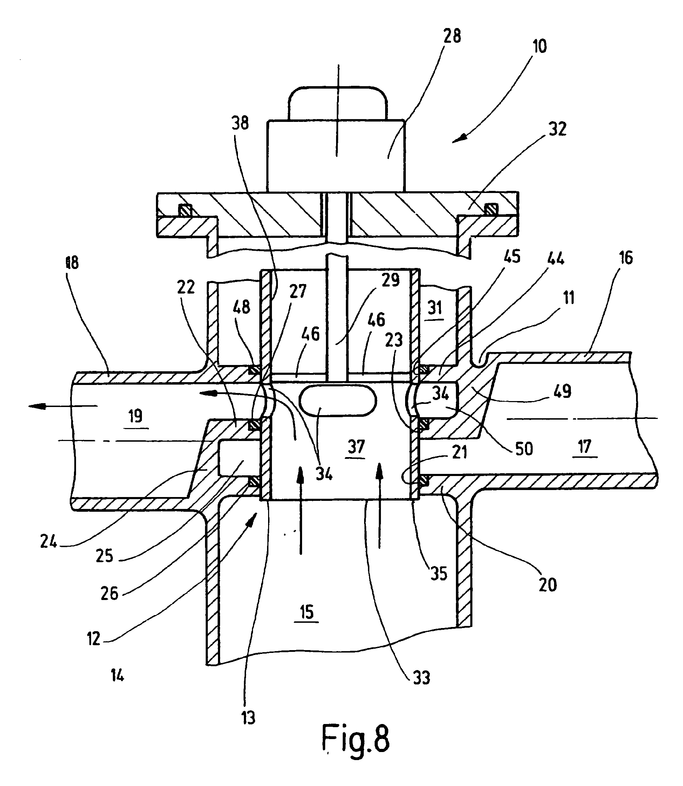

Beim zweiten Ausführungsbeispiel in Fig. 5 und 8 entfällt die durchgehende Querwand 36. Statt dieser weist die Schieberhülse 13 einzelne radiale Stege 46 auf, an denen das Antriebsglied 29 angreifen kann. Die Schieberhülse 13 ist im Inneren 37 durchgehend offen. An dem Ende, das dem die mindestens eine als Einlass für das Kühlmittel dienende Axialöffnung 33 enthaltenden Ende gegenüberliegt, enthält die Schieberhülse 13 mindestens eine axiale Öffnung, die vorzugsweise gänzlich offen ist wie die gegenüberliegende Axialöffnung 33 auch. Die Schieberhülse 13 besteht hier somit aus einer durchgehend und an beiden Enden offenen Zylinderhülse, wobei sich der Wandungsteil 38 im Bereich des mindestens einen Wanddurchbruchs 34 beginnend anschließt und zusätzlich als Führungsteil wirksam ist.

Im Ventilgehäuse 11 ist in Abstand oberhalb der zweiten Wandung 22 mit Führungsöffnung 23 darin eine dritte Wandung 44 mit einer dritten Führungsöffnung 45 darin enthalten, die zu den beiden anderen Führungsöffnungen 21 und 23 koaxial verläuft und wie diese einen Dichtungsring 48 zur Abdichtung gegenüber der Schieberhülse 13, insbesondere dem Wandungsteil 38, enthält. Die dritte Wandung 44 begrenzt zusammen mit einem Wandteil 49 und der zweiten Wandung 22 einen Ringraum 50, der mit dem zweiten Auslass 19 in Verbindung steht und der durch die dritte Wandung 44 und die Schieberhülse 13 zum inneren Raum 31 des Ventilgehäuses 11 hin abgeschlossen ist. In jeder der vier Stellungen befindet sich die Schieberhülse 13 mit dem oberhalb der Wanddurchbrüche 34 sich erstreckenden Wandungsteil 38 im Inneren der dritten Führungsöffnung 45, wodurch der innere Raum 31 mittels des Dichtungsringes 48 in jeder Stellung gegenüber dem zweiten Auslass 19 abgedichtet ist, so dass Kühlmittel, welches durch das Innere der Schieberhülse 13 in den Raum 31 gelangt, von dort nicht in den Ringraum 50 und den zweiten Auslass 19 überströmen kann.

Diese Gestaltung des zweiten Ausführungsbeispieles, bei dem die durchgehende Querwand 36 bei der Schieberhülse 13 entfallen ist, hat den Vorteil, dass auf die Schieberhülse 13 keine Kräfte in Richtung der jeweiligen Stellbewegung wirken können.

Auch bei diesem zweiten Ausführungsbeispiel kann die Schieberhülse 13 vier verschiedene Stellungen gem. Fig. 5 bis 8 und analog Fig. 1 bis 4 einnehmen, wie dies vorstehend zu Fig. 1 bis 4 erläutert ist. Die vier verschiedenen Stellungen sind die gleichen wie in Fig. 1 bis 4.

## Patentansprüche

1. Ventil, insbesondere thermostatisches Ventil, für das Kühlmittel im Kühlmittelkreislauf einer Brennkraftmaschine, das in einem Ventilgehäuse (11) ein Ventilglied (12) in Form einer Schieberhülse (13) aufweist, welche einen Kühlmitteldurchgang entsprechend ihrer Stellung von einem Einlass (15) zu einem ersten Auslass (17) und/oder einem zweiten Auslass (19) im Ventilgehäuse (11) steuert, wobei die Schieberhülse (13) Öffnungen für den Ein- und Austritt des Kühlmittels enthält und in zentralen Führungsöffnungen (21,23) des Ventilgehäuses (11) verschiebbar und abgedichtet geführt ist, von denen eine erste Führungsöffnung (21) in einer den Einlass (15) vom ersten Auslass (17) trennenden Wandung (20) und die zweite, in Abstand über der ersten Führungsöffnung (21) befindliche Führungsöffnung (23) in einer den ersten Auslass (17) vom zweiten Auslass (19) trennenden Wandung (22) enthalten ist,
**dadurch gekennzeichnet,**
**dass** die Schieberhülse (13) als Öffnung für den Einlass des Kühlmittels in diese zumindest eine Axialöffnung (33) und als Öffnung für den Auslass des Kühlmittels daraus zumindest einen Wanddurchbruch (34), vorzugsweise mehrere ringsum in Abständen angeordnete Wandddurchbrüche, in ihrer Hülsenwand (35) enthält.

2. Ventil nach Anspruch 1,
**dadurch gekennzeichnet,**
**dass** die Axialöffnung (33) der Schieberhülse (13) sich über den gesamten, von der Hülsenwandung (35) umgrenzten Querbereich, insbesondere Innendurchmesser, der Schieberhülse (13) erstreckt.

3. Ventil nach Anspruch 1 oder 2,
**dadurch gekennzeichnet,**
**dass** der mindestens eine Wanddurchbruch (34), insbesondere die mehreren Wanddurchbrüche, als kreisförmige Löcher oder als in Umfangsrichtung und/oder in Axialrichtung sich erstreckende, z.B. längliche, Fenster ausgebildet sind.

4. Ventil nach einem der Ansprüche 1 bis 3,
**dadurch gekennzeichnet,**
**dass** die Hülsenwandung (35) der Schieberhülse (13) Zylinderform aufweist.

5. Ventil nach einem der Ansprüche 1 bis 4,
**dadurch gekennzeichnet,**
**dass** im Ventilgehäuse (11) in Abstand oberhalb der zweiten Führungsöffnung (23) eine den zweiten Auslass (19) vom darüber befindlichen Raum (31) des Ventilgehäuses (11) trennende dritte Wandung (44) mit einer dritten Führungsöffnung (45) enthalten ist, in der die Schieberhülse (13) mit einem Wandungsteil (38) verschiebbar und abgedichtet geführt ist.

6. Ventil nach Anspruch 5,
**dadurch gekennzeichnet,**
**dass** die Schieberhülse (13) im Inneren (37) durchgehend offen ist und an dem Ende, das dem die mindestens eine als Einlass für das Kühlmittel dienende Axialöffnung (33) enthaltenden Ende gegenüberliegt, mindestens eine axiale Öffnung enthält, vorzugsweise gänzlich offen ist.

7. Ventil nach einem der Ansprüche 1 bis 4,
**dadurch gekennzeichnet,**
**dass** die Schieberhülse (13) am der Axialöffnung (33) gegenüberliegenden Ende im Bereich oberhalb des mindestens einen Wanddurchbruchs (34) eine geschlossene Querwand (36) aufweist, die das von der Hülsenwandung (35) umgrenzte Innere (37) der Schieberhülse (13) in diesem Bereich abschließt.

8. Ventil nach Anspruch 7,
**dadurch gekennzeichnet,**
**dass** die geschlossene Querwand (36) aus einer Kreisscheibe gebildet ist.

9. Ventil nach einem der Ansprüche 1 bis 8,
**dadurch gekennzeichnet,**
**dass** der Wandungsteil (38) der Schieberhülse (13) in axialer Verlängerung ihrer Hülsenwandung (35) verläuft, als Führungsabschnitt ausgebildet ist und sich im Bereich des mindestens einen Wanddurchbruchs (34) beginnend anschließt.

10. Ventil nach einen der Ansprüche 1 bis 9,
**dadurch gekennzeichnet,**
**dass** am Ventilgehäuse (11) eine Antriebseinrichtung (28) angeordnet ist, die über ein mit der Schieberhülse (13) verbundenes Antriebsglied (29) auf die Schieberhülse (13) zu deren Verschiebung arbeitet.

11. Ventil nach Anspruch 10,
**dadurch gekennzeichnet,**
**dass** die Antriebseinrichtung (28) einen Spindelmotor mit Spindel als Antriebsglied (29) aufweist.

12. Ventil nach einem der Ansprüche 1 bis 11,
**dadurch gekennzeichnet,**
**dass** die Schieberhülse (13) in einer ersten Stellung sich mit dem mindestens einen Wanddurchbruch (34) unterhalb der ersten Führungsöffnung (21) befindet, derart, dass der Durchgang des über die Axialöffnung (33) vom Einlass (15) her in die Schieberhülse (13) eintretenden Kühlmittels zum ersten Auslass (17) sowie zum zweiten Auslass (19) hin gesperrt ist.

13. Ventil nach einen der Ansprüche 1 bis 12,
**dadurch gekennzeichnet,**
**dass** die Schieberhülse (13) in einer zweiten Stellung sich mit dem Bereich, auf dem sich der mindestens eine Wanddurchbruch (34) befindet, zwischen der ersten Führungsöffnung (21) und der zweiten Führungsöffnung (23) befindet, derart, dass der Durchgang des über die Axialöffnung (33) vom Einlass (15) her in die Schieberhülse (13) eintretenden Kühlmittels zum ersten Auslass (17) geöffnet ist, hingegen zum zweiten Auslass (19) gesperrt ist.

14. Ventil nach einem der Ansprüche 1 bis 13,
**dadurch gekennzeichnet,**
**dass** die Schieberhülse (13) in einer dritten Stellung sich mit dem Bereich, auf dem sich der mindestens eine Wanddurchbruch (34) befindet, im Bereich der zweiten Führungsöffnung (23) und derart befindet, dass der mindestens eine Wanddurchbruch (34) zum ersten Auslass (17) und zum zweiten Auslass (19) hin ausmündet und der Durchgang des über die Axialöffnung (33) vom Einlass (15) her in die Schieberhülse (13) eintretenden Kühlmittels zum ersten Auslass (17) und zugleich zum zweiten Auslass (19) hin geöffnet ist.

15. Ventil nach einem der Ansprüche 1 bis 14,
**dadurch gekennzeichnet,**
**dass** die Schieberhülse (13) in einer vierten Stellung sich mit dem Bereich, auf dem sich der mindestens eine Wanddurchbruch (34) befindet, oberhalb der zweiten Wandung (22) mit zweiter Führungsöffnung (23) befindet, derart, dass der mindestens eine Wanddurchbruch (34) zum zweiten Auslass (19) hin ausmündet und der Durchgang des über die Axialöffnung (33) vom Einlass (15) in die Schieberhülse (13) eintretenden Kühlmittels zum zweiten Auslass (19) hin offen ist, hingegen zum ersten Auslass (17) gesperrt ist.

## Claims

1. Valve, in particular thermostatic valve, for the coolant in the coolant circuit of an internal combustion engine, which valve has, in a valve housing (11), a valve member (12) in the form of a sliding sleeve (13) which, according to its position, controls a passage of coolant from an inlet (15) to a first outlet (17) and/or to a second outlet (19) in the valve housing (11), wherein the sliding sleeve (13) contains openings for the inlet and outlet of the coolant and is guided in a displaceable and sealed-off fashion in central guide openings (21, 23) of the valve housing (11), of which a first guide opening (21) is contained in a wall (20) which divides the inlet (15) from the first outlet (17), and the second guide opening (23), which is situated a distance above the first guide opening (21), is contained in a wall (22) which divides the first outlet (17) from the second outlet (19),
**characterized**
**in that**, in its sleeve wall (35), the sliding sleeve (13) contains at least one axial opening (33) as an opening for the inlet of the coolant into said sliding sleeve (13), and at least one wall aperture (34), preferably a plurality of wall apertures arranged at intervals peripherally, as an opening for the outlet of the coolant out of said sliding sleeve.

2. Valve according to Claim 1,
**characterized**
**in that** the axial opening (33) of the sliding sleeve (13) extends over the entire transverse region enclosed by the sleeve wall (35), in particular the inner diameter, of the sliding sleeve (13).

3. Valve according to Claim 1 or 2,
**characterized**
**in that** the at least one wall aperture (34), in particular the plurality of wall apertures, are formed as circular holes or as windows, for example oblong windows, which extend in the peripheral direction and/or in the axial direction.

4. Valve according to one of Claims 1 to 3,
**characterized**
**in that** the sleeve wall (35) of the sliding sleeve (13) is cylindrical in shape.

5. Valve according to one of Claims 1 to 4,
**characterized**
**in that** a third wall (44), which has a third guide opening (45) and divides the second outlet (19) from that space (31) of the valve housing (11) which is situated above said second outlet (19), is contained in the valve housing (11) at a distance above the second guide opening (23), the sliding sleeve (13) being guided in said third guide opening (45) in a displaceable and sealed-off fashion by means of a wall part (38).

6. Valve according to Claim 5,
**characterized**
**in that** the sliding sleeve (13) is continuously open in the interior (37) and contains at least one axial opening, is preferably completely open, at that end which is situated opposite the end which contains the at least one axial opening (33) which serves as an inlet for the coolant.

7. Valve according to one of Claims 1 to 4,
**characterized**
**in that**, at that end which is situated opposite the axial opening (33), in the region above the at least one wall aperture (34), the sliding sleeve (13) has a closed transverse wall (36) which closes off the interior (37) of the sliding sleeve (13) in said region, said interior (37) being enclosed by the sleeve wall (35).

8. Valve according to Claim 7,
**characterized**
**in that** the closed transverse wall (36) is formed by a circular plate.

9. Valve according to one of Claims 1 to 8,
**characterized**
**in that** the wall part (38) of the sliding sleeve (13) runs as an axial extension of the sleeve wall (35) of said sliding sleeve (13), is formed as a guide section and follows on starting in the region of the at least one wall aperture (34).

10. Valve according to one of Claims 1 to 9,
**characterized**
**in that** a drive device (28) is arranged on the valve housing (11), which drive device (28) acts on the sliding sleeve (13) via a drive element (29) which is connected to the sliding sleeve (13), in order to displace the latter.

11. Valve according to Claim 10,
**characterized**
**in that** the drive device (28) has a spindle motor with a spindle as a drive element (29).

12. Valve according to one of Claims 1 to 11,
**characterized**
**in that**, in a first position, the sliding sleeve (13) is situated such that the at least one wall aperture (34) is below the first guide opening (21), in such a way that the passage of the coolant, which enters the sliding sleeve (13) from the inlet (15) via the axial opening (33), to the first outlet (17) and to the second outlet (19) is blocked.

13. Valve according to one of Claims 1 to 12,
**characterized**
**in that**, in a second position, the sliding sleeve (13) is situated such that that region on which the at least one wall aperture (34) is situated is between the first guide opening (21) and the second guide opening (23), in such a way that the passage of the coolant, which enters the sliding sleeve (13) from the inlet (15) via the axial opening (33), to the first outlet (17) is open but to the second outlet (19) is blocked.

14. Valve according to one of Claims 1 to 13,
**characterized**
**in that**, in a third position, the sliding sleeve (13) is situated such that that region on which the at least one wall aperture (34) is situated is in the region of the second guide opening (23), in such a way that the at least one wall aperture (34) opens out to the first outlet (17) and to the second outlet (19), and the passage of the coolant, which enters the sliding sleeve (13) from the inlet (15) via the axial opening (33), to the first outlet (17) and simultaneously to the second outlet (19) is open.

15. Valve according to one of Claims 1 to 14,
**characterized**
**in that**, in a fourth position, the sliding sleeve (13) is situated such that that region on which the at least one wall aperture (34) is situated is above the second wall (22) having the second guide opening (23), in such a way that the at least one wall aperture (34) opens out to the second outlet (19), and the passage of the coolant, which enters the sliding sleeve (13) from the inlet (15) via the axial opening (33), to the second outlet (19) is open but to the first outlet (17) is blocked.

## Revendications

1. Soupape, notamment soupape thermostatique, pour le réfrigérant dans le circuit de réfrigérant d'un moteur à combustion interne, qui présente, dans le boîtier de soupape (11) un organe de soupape (12) en forme de douille-tiroir (13), qui commande un passage de réfrigérant en fonction de sa position depuis une entrée (15) à une première sortie (17) et/ou à une deuxième sortie (19) dans le boîtier de soupape (11), la douille-tiroir (13) présentant des ouvertures pour l'entrée et la sortie du réfrigérant et étant guidée dans des ouvertures de guidage centrales (21, 23) du boîtier de soupape (11) de manière coulissante et étanche, dont une première ouverture de guidage (21) est contenue dans une paroi (20) séparant l'entrée (15) de la sortie (17) et la deuxième ouverture de guidage (23) située à distance au-dessus de la première ouverture de guidage (21) est contenue dans une paroi (22) séparant la première sortie (17) de la deuxième sortie (19),
**caractérisée en ce que**
la douille-tiroir (13) présente dans sa paroi de douille (35), en tant qu'ouverture pour l'entrée du réfrigérant dans celle-ci au moins une ouverture axiale (33) et en tant qu'ouverture pour la sortie du réfrigérant hors de celle-ci au moins un perçage dans la paroi (34), de préférence plusieurs perçages dans la paroi, disposés sur là périphérie à distances les uns des autres.

2. Soupape selon la revendication 1,
**caractérisée en ce que**
l'ouverture axiale (33) de la douille-tiroir (13) s'étend sur l'ensemble de la région transversale limitée par la paroi de douille (35) notamment sur le diamètre intérieur de la douille-tiroir (13).

3. Soupape selon la revendication 1 ou 2,
**caractérisée en ce que**
l'au moins un perçage de paroi (34), notamment les plusieurs perçages de paroi, sont réalisés sous forme de trous circulaires ou sous forme de fenêtres s'étendant dans la direction périphérique et/ou dans la direction axiale, par exemple des fenêtres oblongues.

4. Soupape selon l'une quelconque des revendications 1 à 3, **caractérisée en ce que**
la paroi de douille (35) de la douille-tiroir (13) présente une forme cylindrique.

5. Soupape selon l'une quelconque des revendications 1 à 4,
**caractérisée en ce que**
dans le boîtier de soupape (11), à distance au-dessus de la deuxième ouverture de guidage (23) est prévue une troisième paroi (44) séparant la deuxième sortie (19) de l'espace situé au-dessus (31) du boîtier de soupape (11), avec une troisième ouverture de guidage (45) dans laquelle la douille-tiroir (13) est guidée avec une partie de paroi (38) de manière coulissante et étanche.

6. Soupape selon la revendication 5,
**caractérisée en ce que**
la douille-tiroir (13) est ouverte en continu à l'intérieur (37) et présente, à l'extrémité opposée à l'extrémité présentant l'au moins une ouverture axiale (33) servant d'entrée pour le réfrigérant, au moins une ouverture axiale, et de préférence est complètement ouverte.

7. Soupape selon l'une quelconque des revendications 1 à 4,
**caractérisée en ce que**
la douille-tiroir (13) présente à l'extrémité opposée à l'ouverture axiale (33) dans la région au-dessus de l'au moins un perçage de paroi (34), une paroi transversale fermée (36) qui ferme dans cette région l'intérieur (37) de la douille-tiroir (13) limité par la paroi de douille (35).

8. Soupape selon la revendication 7,
**caractérisée en ce que**
la paroi transversale fermée (36) est formée par un disque circulaire.

9. Soupape selon l'une quelconque des revendications 1 à 8,
**caractérisée en ce que**
la partie de paroi (38) de la douille-tiroir (13) s'étend dans la prolongation axiale de sa paroi de douille (35), est réalisée sous forme de portion de guidage et se raccorde en commençant dans la région de l'au moins un perçage de paroi (34).

10. Soupape selon l'une quelconque des revendications 1 à 9,
**caractérisée en ce que**
l'on dispose sur le boîtier de soupape (11) un dispositif d'entraînement (28) qui fonctionne par le biais d'un organe d'entraînement (29) connecté à la douille-tiroir (13) pour faire coulisser la douille-tiroir (13).

11. Soupape selon la revendication 10,
**caractérisée en ce que**
le dispositif d'entraînement (28) présente un moteur à broche avec une broche en tant qu'organe d'entraînement (29).

12. Soupape selon l'une quelconque des revendications 1 à 11,
**caractérisée en ce que**
la douille-tiroir (13) se trouve dans une première position avec l'au moins un perçage de paroi (34) en dessous de la première ouverture de guidage (21), de telle sorte que le passage du réfrigérant entrant par le biais de l'ouverture axiale (33) de l'entrée (15) dans la douille-tiroir (13) à la première sortie (17) ainsi qu'à la deuxième sortie (19) soit bloqué.

13. Soupape selon l'une quelconque des revendications 1 à 12,
**caractérisée en ce que**
la douille-tiroir (13) se trouve dans une deuxième position, avec la région sur laquelle se situe l'au moins un perçage de paroi (34), entre la première ouverture de guidage (21) et la deuxième ouverture de guidage (23), de telle sorte que le passage du réfrigérant entrant par le biais de l'ouverture axiale (33) de l'entrée (15) dans la douille-tiroir (13) soit ouvert vers la première sortie (17), mais soit bloqué vers la deuxième sortie (19).

14. Soupape selon l'une quelconque des revendications 1 à 13,
**caractérisée en ce que**
la douille-tiroir (13) se trouve dans une troisième position avec la région sur laquelle se situe l'au moins un perçage de paroi (34), dans la région de la deuxième ouverture de guidage (23) et de telle sorte que l'au moins un perçage de paroi (34) débouche vers la première sortie (17) et vers la deuxième sortie (19) et que le passage du réfrigérant entrant par le biais de l'ouverture axiale (33) de l'entrée (15) dans la douille-tiroir (13) soit ouvert vers la première sortie (17) et en même temps vers la deuxième sortie (19) .

15. Soupape selon l'une quelconque des revendications 1 à 14,
**caractérisée en ce que**
la douille-tiroir (13) se trouve, dans une quatrième position avec la région sur laquelle se situe l'au moins un perçage de paroi (34), au-dessus de la deuxième paroi (22) avec la deuxième ouverture de guidage (23), de telle sorte que l'au moins un perçage de paroi (34) débouche vers la deuxième sortie (19) et que le passage du réfrigérant entrant par le biais de l'ouverture axiale (33) de l'entrée (15) dans la douille-tiroir (13) soit ouvert vers la deuxième sortie (19) mais soit fermé vers la première sortie (17).
